# EUROPEAN PATENT APPLICATION

(11) **EP 3 636 500 A1**
(43) Date of publication of application: **15.04.2020**
(21) Application number: 18813161.9
(22) Date of filing: 29.05.2018
(51) Int. Cl.: B60R 25/0215, E05B 83/00

(54) **ELECTRIC STEERING LOCK DEVICE**

(30) Priority: 08.06.2017 JP 2017113653
(71) Applicant: Alpha Corporation, Yokohama-shi, Kanagawa 236-0004 (JP)
(72) Inventor: KUROSAWA Junichi, Yokohama-shi Kanagawa 236-0004 (JP); TAKANO Yoshitaka, Yokohama-shi Kanagawa 236-0004 (JP)
(74) Representative: Grünecker Patent- und Rechtsanwälte PartG mbB
(86) International application number: PCT/JP2018/020447
(87) International publication number: WO 2018/225573

(57) **Abstract**

A carrier (7) is capable of moving between a locked position where a lock rod (8) is capable of engaging with an engagement-receiving part (SE) of a steering shaft (S) and a locking-side overrun position located further forward than the locked position. While located in the locked position, the carrier (7) engages with a gear member (4) via a mechanism for converting rotational motion of the gear member (4) into motion of the carrier (7) along a rotational axis (X). While located in the locking-side overrun position, the carrier (7) disengages from the gear member (4), and allows the gear member (4) to idly rotate. While the carrier (7) is located at the locked position or close to the steering shaft (S) beyond the locked position, a stopper part (26) stops the lock rod (8) from moving toward the steering shaft (S) beyond an engagement position where the lock rod (8) engages with the engagement-receiving part (SE) of the steering shaft (S).

## Description

### TECHNICAL FIELD

The disclosure relates to an electric steering lock device which is electrically operated to lock and unlock turn of a steering shaft of an automobile.

### BACKGROUND ART

Patent Literature 1 discloses a conventional electric steering lock device. In this device, rotations of an output shaft of an electric motor are transmitted to a gear member while the speed of the rotations is reduced and the direction of the rotations is converted at right angles, by a worm gear and a worm wheel. An internally-threaded part is formed in an inner periphery of the gear member, and the internally-threaded part is screwed to an externally-threaded part formed in a driver. Thus, the rotations of the gear member move the driver together with a lock bolt connected to the driver. The electric motor, the gear member, the driver and the lock bolt are housed in a case.

### CITATION LIST

### PATENT LITERATURE

Patent Literature 1: Japanese Patent Application Publication No. 2015-120502

### SUMMARY OF INVENTION

### TECHNICAL PROBLEM

The above electric steering lock device involves a risk that: if the electric motor causes an overrun for some reason during a locking operation, the driver and the case mechanically interfere with each other; the interference restricts the movement of the driver; and excessive load acts on a drive mechanism including the internally-threaded part and the externally-threaded part.

An object of the disclosure is to prevent excessive load from acting on the drive mechanism when an overrun occurs, and to enhance robustness of the electric steering lock device.

### SOLUTION TO PROBLEM

An electric steering lock device according to an aspect of the disclosure includes: a gear member rotationally driven by an electric motor; a lock unit capable of advancing and retreating in a direction toward a steering shaft; a housing for housing the gear member and the lock unit. The lock unit includes: a lock member capable of engaging with an engagement-receiving part of the steering shaft; a carrier for holding the lock member in a way that makes the lock member capable of relatively moving in the direction; and a first biasing member, installed between the carrier and the lock member, for biasing the lock member relative to the carrier toward the steering shaft. The carrier is capable of moving in the direction, at least between a locked position where the lock member is capable of engaging with the engagement-receiving part of the steering shaft and a locking-side overrun position located close to the steering shaft beyond the locked position. While located at the locked position, the carrier engages with the gear member via a mechanism for converting rotational motion of the gear member into motion of the carrier in the direction. While located at the locking-side overrun position, the carrier is released from the engagement with the gear member via the mechanism, and allows the gear member to idly rotate relative to the carrier. The housing includes a stopper part which is capable of contacting the lock member while the carrier is located at the locked position or close to the steering shaft beyond the locked position. The stopper part comes into contact with the lock member, and thereby stops the lock member from moving toward the steering shaft beyond a position where the lock member engages with the engagement-receiving part of the sheering shaft.

### ADVANTAGEOUS EFFECTS OF INVENTION

The above device is capable of preventing excessive load from acting on the drive mechanism when an overrun occurs, and can enhance robustness of the electric steering lock device.

### BRIEF DESCRIPTION OF DRAWINGS

[Fig. 1] Fig. 1 is an exploded perspective view of a main section of an electric steering lock device according to a first embodiment.
[Fig. 2A] Fig. 2A is a vertical cross-sectional view of the electric steering lock device with a carrier located at a locked position.
[Fig. 2B] Fig. 2B is a cross-sectional view taken along the IIb-IIb line in Fig. 2A.
[Fig. 3A] Fig. 3A is a vertical cross-sectional view of the electric steering lock device with the carrier located at an unlocked position.
[Fig. 3B] Fig. 3B is a cross-sectional view taken along the IIIb-IIIb line in Fig. 3A.
[Fig. 4A] Fig. 4A is a vertical cross-sectional view of the electric steering lock device with the carrier located at a locking-side overrun position.
[Fig. 4B] Fig. 4B is a cross-sectional view taken along the IVb-IVb line in Fig. 4A.
[Fig. 5A] Fig. 5A is a vertical cross-sectional view of the electric steering lock device with the carrier located at an unlocking-side overrun position.
[Fig. 5B] Fig. 5B is a cross-sectional view taken along the Vb-Vb line in Fig. 5A.
[Fig. 6] Fig. 6 is a graph showing a relationship between a position of the carrier and a position of a lock rod.
[Fig. 7] Fig. 7 is a graph showing relationships between forces applied by first and second springs to the carrier and the position of the carrier.
[Fig. 8] Fig. 8 is a view illustrating a configuration in which a cam follower and cam grooves are arranged in a second embodiment; Fig. 8(a) is a vertical cross-sectional view illustrating the configuration; and Figs. 8(b) and 8(c) are exploded cross-sectional views of the configuration taken along the VIII-VIII line in Fig. 8(a), illustrating a plane on which the cam grooves are formed.
[Fig. 9] Fig. 9 is a perspective view of a carrier according to a third embodiment.
[Fig. 10] Fig. 10 is a graph showing relationships between forces applied by first and second springs to a carrier and the position of the carrier in an electric steering lock device according to a fourth embodiment.
[Fig. 11] Fig. 11 is a vertical cross-sectional view of an electric steering lock device according to a fifth embodiment.

### DESCRIPTION OF EMBODIMENTS

Referring to the drawings, descriptions will be hereinbelow provided for electric steering lock devices 1 according to several embodiments. Incidentally, terms indicating directions, such as "front" and "rear," in the following descriptions will be given for the sake of convenience to discuss positional relationships among components, but shall not be construed as limiting an actual orientation and the like in which the device is installed.

### [First Embodiment]

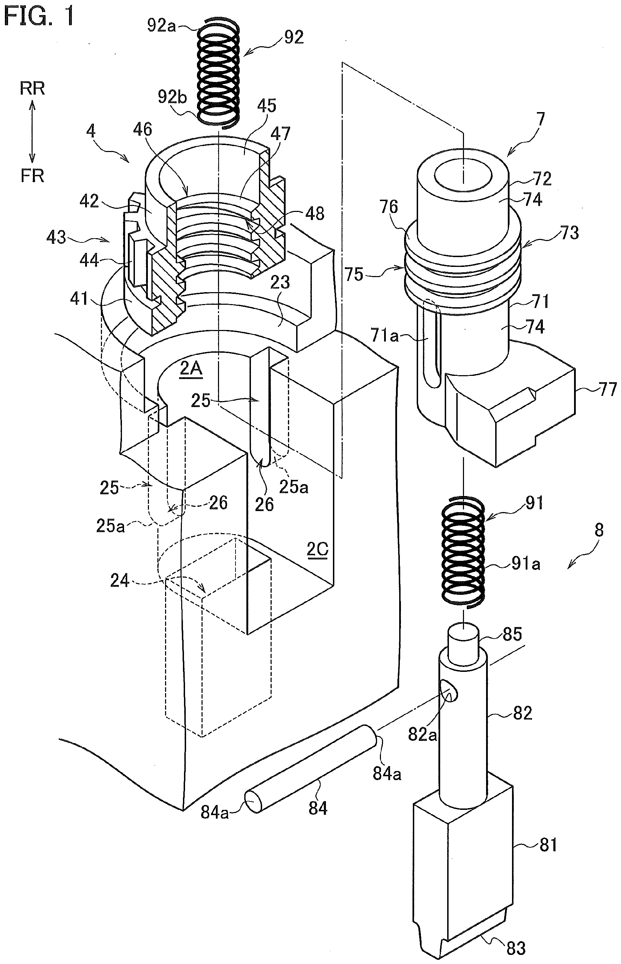

An electric steering lock device 1 is a device which is electrically operated to lock and unlock the turn of a steering shaft S. As illustrated in Figs. 1 to 5B, the electric steering lock device 1 includes a housing case 2 and a housing lid 3 which constitute a housing.

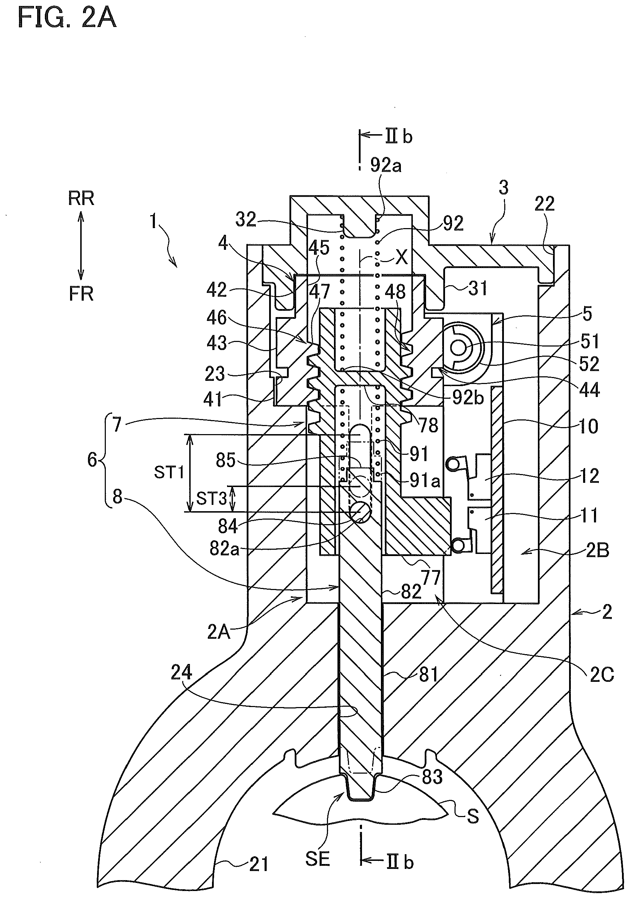

The housing case 2 is, for example, a metal-made member shaped like a rectangular container. As illustrated in Figs. 2A to 5B, an arc-shaped recessed part 21 is formed in a front portion of the housing case 2. A column tube (not illustrated) fits in the recessed part 21. An arc-shaped bracket (not illustrated) is arranged on the opposite side of the recessed part 21 with the column tube interposed in between. The column tube is held between and by the bracket and the recessed part 21, and the housing case 2 is thus fixed to the column tube. The steering shaft S is inserted through the inside of the column tube. A steering wheel (not illustrated) is attached to an end of the steering shaft S. The other end of the steering shaft S is connected to a steering gear box (not illustrated). Once the user turns the steering wheel, the steering shaft S transmits the turn of the steering wheel to the steering gear box to steer the left and right front wheels.

The housing lid 3 is, for example, a metal-made member shaped like a rectangular flat plate. As illustrated in Figs. 2A to 5B, the housing lid 3 fits in an inner periphery of a rear end portion of the housing case 2 to cover a rear surface opening part 22 of the housing case 2 from the rear, and is fixed to the housing case 2.

As illustrated in Figs. 1 to 5B, an actuator storage part 2A, a circuit board storage part 2B, and a communication part 2C through which the two storage parts 2A, 2B communicate with each other are formed inside the housing case 2. The actuator storage part 2A contains a gear member 4, an electric motor 5 serving as an electrically-operated motor for rotationally driving the gear member 4, and a lock unit 6.

The gear member 4 is, for example, a resin-made annular member. As illustrated in Figs. 1 to 5B, the gear member 4 is supported by a rear portion of the actuator storage part 2A in a way that enable the gear member 4 to turn around a rotational axis X of the gear member 4, and includes a front annular part 41, a rear cylindrical part 42 and a middle part 43 between the front annular part 41 and the rear cylindrical part 42. The front annular part 41 is slidably and turnably held by a semi-cylindrical holding surface 23 formed on the rear portion of the actuator storage part 2A. The rear cylindrical part 42 is slidably and turnably held by an inner peripheral surface of a cylindrical holding part 31 projectingly provided on an inner surface of the housing lid 3. A worm wheel 44 is formed on an outer periphery of the middle part 43.

An inner periphery of the gear member 4 includes: a cylindrical surface 45 whose inner diameter is constant in an axial direction of the gear member 4; and an internally-threaded part 46 formed throughout the middle part 43 and the front annular part 41. The internally-threaded part 46 includes a spiral ridge 47 projecting inward in a radial direction of the gear member 4 from the cylindrical surface 45, and shaped like a spiral winding around the rotational axis X. A groove 48 is formed between each two neighboring portions of the ridge 47 which are next to each other in the axial direction. The groove 48 continuously extends along a spiral winding around the rotational axis X. The groove 48 will be hereinafter referred to as a "spiral groove 48" as well. An end portion opening of the spiral groove 48 is formed between an end portion of the ridge 47 and another portion of the ridge 47 which is next to the end portion in the axial direction. The two end portions of the spiral groove 48 are opened in a circumferential direction at the respective end portion openings.

As illustrated in Figs. 2A, 3A, 4A and 5A, the electric motor 5 is arranged near the gear member 4 with an output shaft 51 substantially in parallel with a plane orthogonal to the rotational axis X of the gear member 4. A worm gear 52 with a small diameter is attached to the output shaft 51 in a way that enables the worm gear 52 to turn integrally with the output shaft 51. The worm gear 52 meshes with the worm wheel 44 of the gear member 4.

As illustrated in Figs. 1 to 5B, the lock unit 6 includes a substantially cylindrical carrier 7, and a lock rod 8 as a lock member capable of engaging with an engagement-receiving part SE (a bottomed or bottomless engagement recessed part) of the steering shaft S. The lock unit 6 is detachably connected to the gear member 4 via a mechanism which converts rotational motion of the gear member 4 around the rotational axis X into linear motion of the carrier 7 along the rotational axis X. A mechanism which converts the rotational motion into the linear or curvilinear motion will be hereinafter referred to as a "motion converting mechanism" as well. While in engagement with the gear member 4, the lock unit 6 is capable of moving forward and rearward in the front-rear direction along the rotational axis X (capable of advancing and retreating in a direction toward the steering shaft S) in conjunction with rotation of the gear member 4.

The carrier 7 is inserted through the inside of the gear member 4. The carrier 7 is made of, for example, a metal (for example, die-cast of zinc). The carrier 7 includes a front cylindrical part 71, a rear cylindrical part 72 and a middle part 73 between the front and rear cylindrical parts 71, 72. Outer peripheral surfaces of the front and rear cylindrical parts 71, 72 include cylindrical surfaces 74 whose outer diameters are constant in the axial direction, respectively. An externally-threaded part 75 is formed in an outer periphery of the middle part 73. The externally-threaded part 75 meshes with the internally-threaded part 46 of the gear member 4. The externally-threaded part 75 includes a spiral ridge 76 projecting outward in the radial direction from the cylindrical surfaces 74, and shaped like a spiral winding around the rotational axis X.

The externally-threaded part 75 and the internally-threaded part 46 form the above-mentioned motion converting mechanism. Specifically, in conjunction with the rotational motion of the gear member 4 around the rotational axis X relative to the carrier 7, the carrier 7 relatively moves along the spiral groove 48 with the ridge 76 as a protrusion of the carrier 7 remaining in engagement with the spiral groove 48. This converts the rotational motion of the gear member 4 into the linear motion of the carrier 7 along the rotational axis X. Thus, the electric motor 5 can move the carrier 7 forward and rearward along the rotational axis X by turning the gear member 4 around the rotational axis X.

A pair of long holes 71a penetrating the front cylindrical part 71 in a direction orthogonal to the front-rear direction are formed in a side surface of the front cylindrical part 71. Each long hole 71a extends in parallel with the rotational axis X. In addition, a striker part 77 shaped like a rectangular box is projectingly provided on a side surface of the front cylindrical part 71 which faces the circuit board storage part 2B. The striker part 77 turns on first and second microswitches 11, 12 (which will be described later) by coming into contact with roller arms of the respective first and second microswitches 11, 12.

The lock rod 8 is, for example, a member made of a metal such as steel, and includes a plate part 81, and a rod part 82 extending rearward from a rear end of the plate part 81. The plate part 81 is inserted through the inside of a lock bolt insertion hole 24 having a rectangular cross section and formed in the actuator storage part 2A of the housing case 2, and is capable of moving forward and rearward inside the hole. An engagement part 83 which engages with the engagement-receiving part SE of the steering shaft S is formed on a distal end of the plate part 81. A hole 82a penetrating the rod part 82 in a direction orthogonal to the front-rear direction is formed in the rod part 82. A pin 84 as a shaft member is press-fitted and fixed to the hole 82a. The pin 84 is inserted through and penetrates the two long holes 71a in the carrier 7. The lock rod 8 is linked to the carrier 7 via the pin 84.

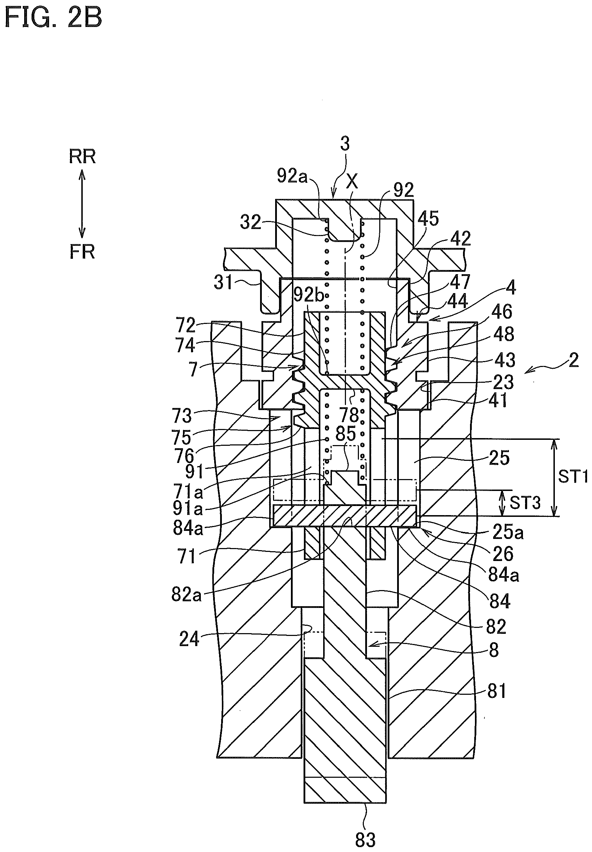

As illustrated in Figs. 2A and 2B, the pin 84 is capable of moving inside and along the long holes 71a in the carrier 7 by a first distance ST1, but is incapable of moving in any direction crossing a longitudinal direction of the long holes 71a. In other words, the lock rod 8 is held by the carrier 7 in a way that enables the lock rod 8 to move forward and rearward in the direction of the rotational axis X relative to the carrier 7 by the first distance ST1, but does not allow the lock rod 8 to rotate relative to the carrier 7.

As illustrated in Figs. 1 to 5B, guide grooves 25 extending in parallel with the axial direction X are formed in an inner side surface of the actuator storage part 2A of the housing case 2. End parts 84a of the pin 84 are capable of moving in the front-rear direction along the respective guide grooves 25 while remaining in engagement with the guide grooves 25, but are incapable of moving in any direction crossing a direction of the extension of the guide grooves 25. In other words, the engagement between the guide grooves 25 and the end parts 84a of the pin 84 blocks the rotation of the lock unit 6 (the lock rod 8 and the carrier 7) around the rotational axis X relative to the housing case 2.

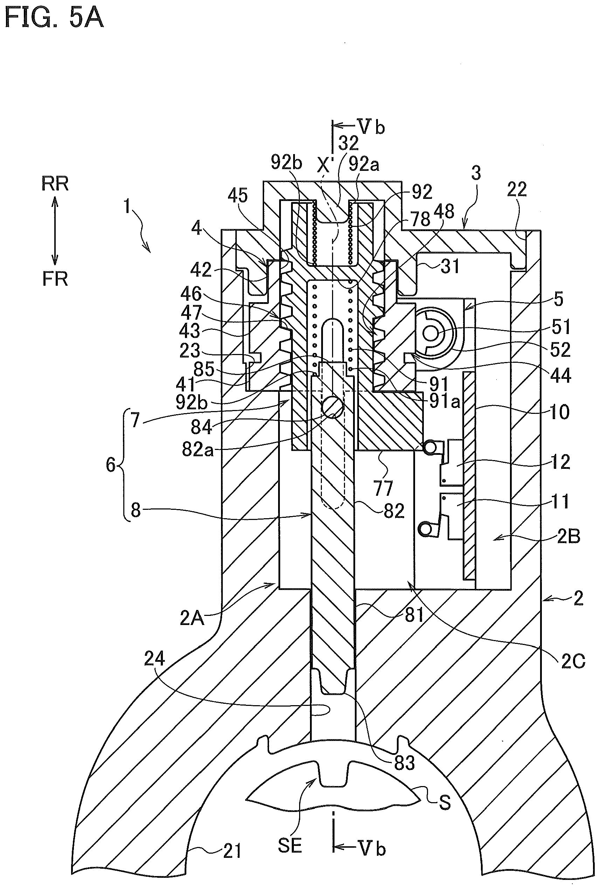

As illustrated in Figs. 2A to 5B, a partition wall 78 which divides a hollow space inside the carrier 7 into two portions is provided to the middle part 73 of the carrier 7. A first spring 91 as a first biasing member is installed and compressed between the partition wall 78 and a rear end of the rod part 82 of the lock rod 8. A front end 91a of the first spring 91 is fixed to a columnar spring receiver 85 formed in the rear end of the rod part 82.

In addition, a second spring 92 as a second biasing member is installed and compressed between the inner surface of the housing lid 3 and the partition wall 78 of the carrier 7. A rear end 92a of the second spring 92 is fixed to a columnar spring receiver 32 formed in a central portion of the cylindrical holding part 31 of the housing lid 3.

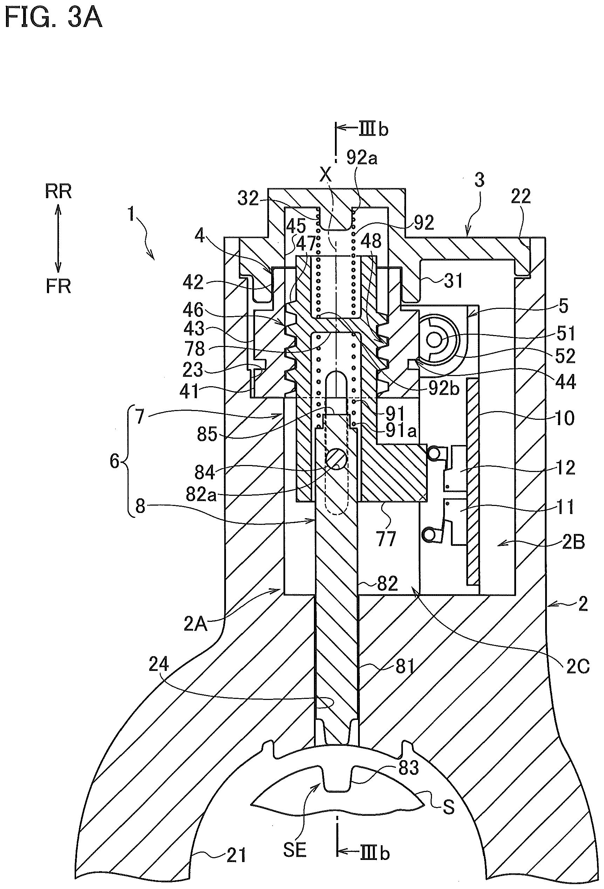

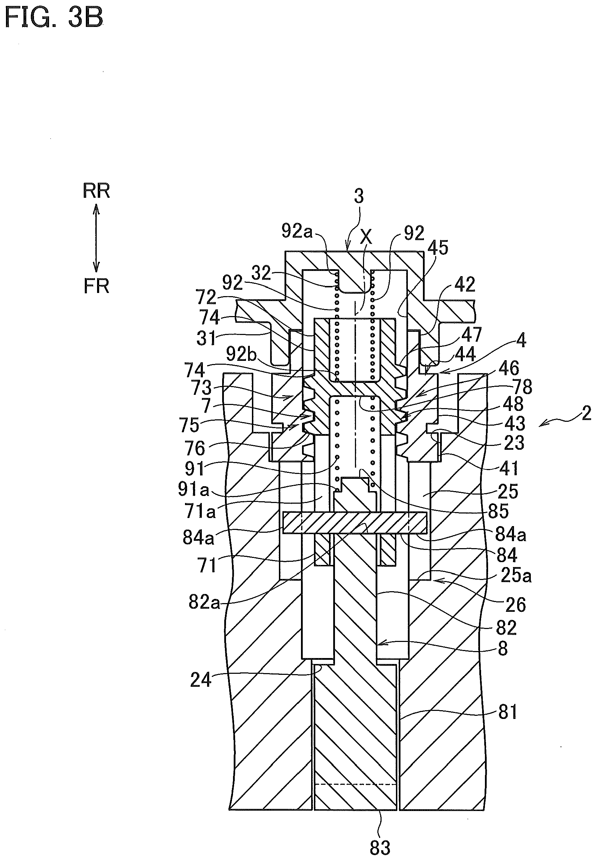

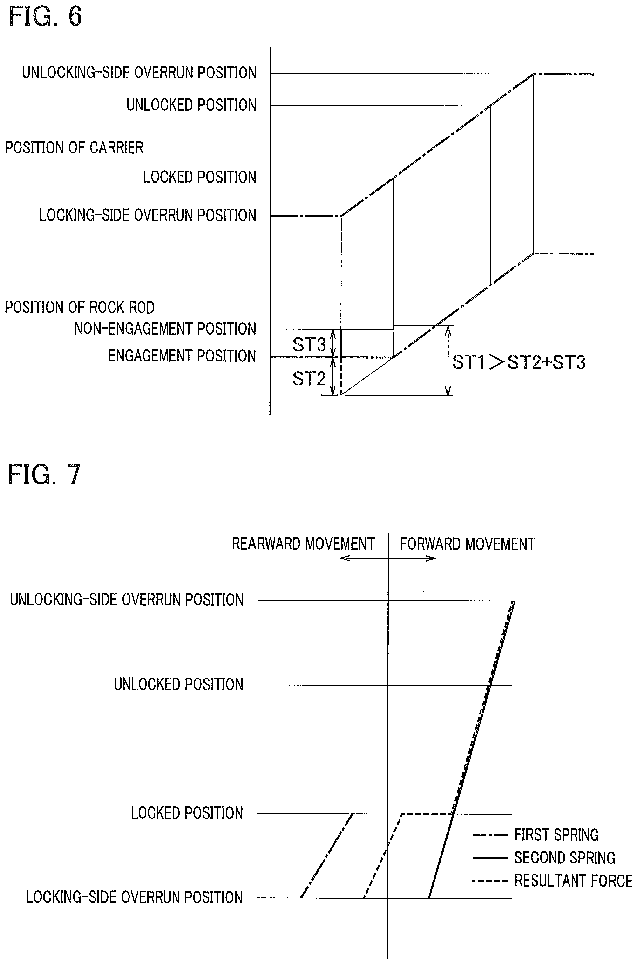

The carrier 7 is capable of moving in the front-rear direction between a "locked position" and an "unlocked position" behind the locked position while making the ridge 76 remain in engagement with the spiral groove 48 of the gear member 4. As illustrated in Fig. 6, while the carrier 7 is located at the locked position, the lock rod 8 is located at an "engagement position" relative to the housing case 2. At this time, the engagement part 83 of the lock rod 8 engages with the engagement-receiving part SE of the steering shaft S, as illustrated in Fig. 2A. While the carrier 7 is located at the unlocked position, the engagement part 83 of the lock rod 8 retreats in the lock bolt insertion hole 24 of the engagement part 83 of the lock rod 8, as illustrated in Figs. 3A and 3B.

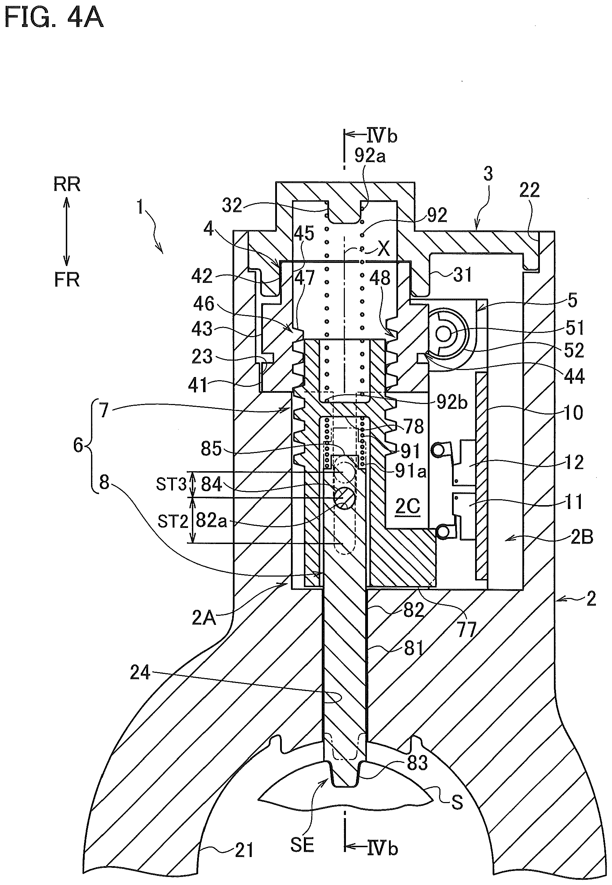

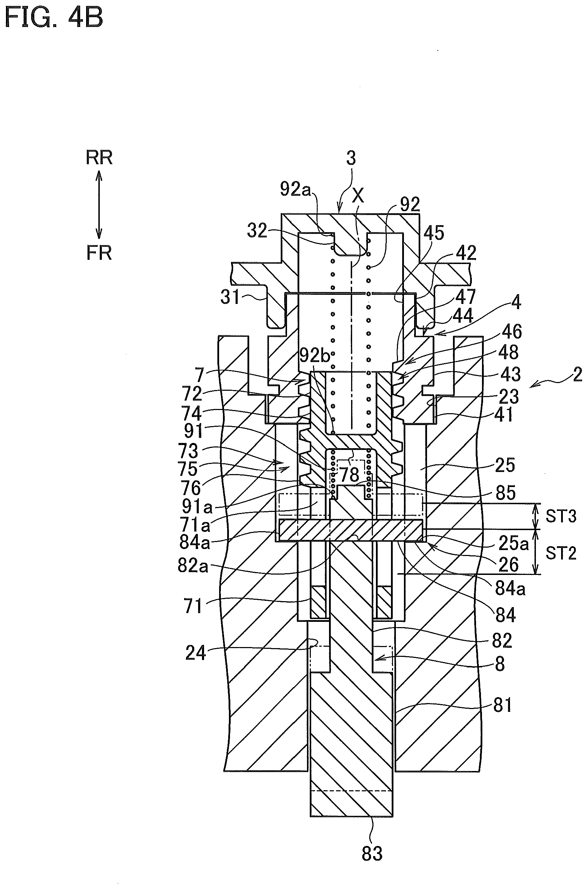

Furthermore, as illustrated in Figs. 4A, 4B and 6, the carrier 7 is capable of moving further forward than the locked position until the carrier 7 enters into a state in which a rear end portion of the ridge 76 of the carrier 7 goes out of a front end portion of the spiral groove 48 of the gear member 4. Thereafter, in a case where the gear member 4 continues rotating in a direction in which to move the carrier 7 forward while the ridge 76 remains out of the spiral groove 48, the rear end portion of the ridge 76 goes around along the ridge 47 in the front row of the internally-threaded part 46 while sliding over a front side surface of the ridge 47 in the circumferential direction. In other words, the externally-threaded part 75 of the carrier 7 and the internally-threaded part 46 of the gear member 4 rotate relative to each other in a counter-screwing direction, and the gear member 4 thus idly rotates relative to the carrier 7 without mechanically interfering with the carrier 7. The position at which the carrier 7 is located while the gear member 4 is idling without mechanically interfering with the carrier 7 will be referred to as a "locking-side overrun position." The locking-side overrun position is away from the locked position by a second distance ST2.

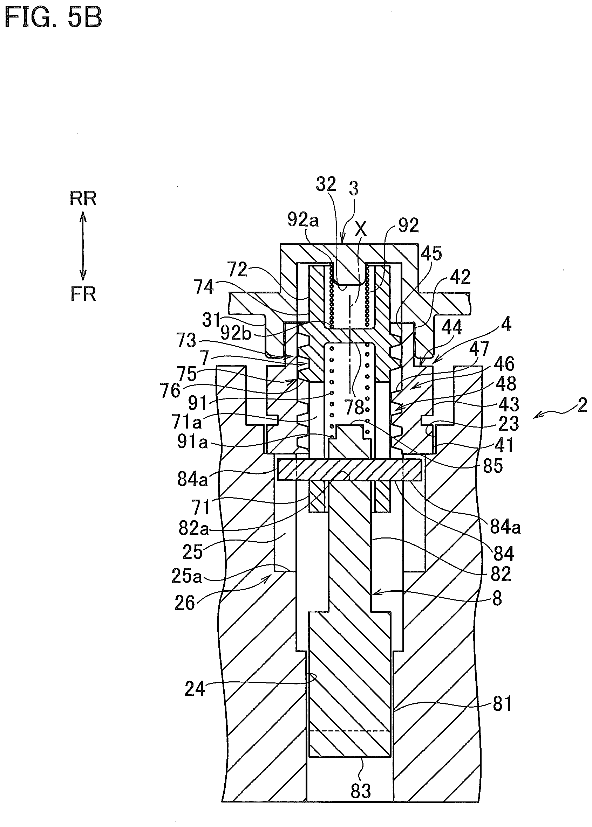

Furthermore, as illustrated in Figs. 5A, 5B and 6, the carrier 7 is capable of moving further rearward than the unlocked position until the carrier 7 enters into a state in which a front end portion of the ridge 76 of the carrier 7 goes out of a rear end portion of the spiral groove 48 of the gear member 4. Thereafter, in a case where the gear member 4 continues rotating in a direction in which to move the carrier 7 rearward while the ridge 76 remains out of the spiral groove 48, the front end portion of the ridge 76 goes around along the ridge 47 in the last row of the internally-threaded part 46 of the gear member 4 while sliding over a rear side surface of the ridge 47 in the circumferential direction. In other words, the externally-threaded part 75 of the carrier 7 and the internally-threaded part 46 of the gear member 4 rotate relative to each other in the counter-screwing direction, and the gear member 4 thus idly rotates relative to the carrier 7 without mechanically interfering with the carrier 7. The position at which the carrier 7 is located while the gear member 4 is idling without mechanically interfering with the carrier 7 will be referred to as an "unlocking-side overrun position."

In addition, the electric steering lock device 1 has a half-lock function, although discussed later. Thus, as illustrated in Figs. 2A and 2B, while the carrier 7 is located at the locked position, the lock rod 8 is capable of moving between the "engagement position" (which is indicated with a solid line in Figs. 2A and 2B) and a "non-engagement position" (which is indicated with a double-dotted chain line in Figs. 2A and 2B) behind the engagement position. While the lock rod 8 is located at the non-engagement position, the engagement part 83 of the lock rod 8 is on a portion of the steering shaft S which is other than the engagement-receiving part SE (for example, on an outer peripheral cylindrical surface of the steering shaft S). The non-engagement position is away from the engagement position by a third distance ST3. Furthermore, as illustrated in Fig. 6, the sum of the second distance ST2 and the third distance ST3 is less than the first distance ST1 (ST1>ST2+ST3).

As illustrated in Figs. 2A, 2B, 4A and 4B, front end parts 25a of the guide grooves 25 form stopper parts 26 which are in contact, and in engagement, with the end parts 84a of the pin 84 while the lock rod 8 is located at the engagement position. The stopper parts 26 are in engagement with the pin 84 of the lock rod 8 even while the carrier 7 is located at the locked position or ahead of the locked position. Thus, the stopper parts 26 block the forward movement of the lock rod 8 beyond the engagement position.

While the pin 84 is located at front ends of the long holes 71a of the carrier 7 (while the lock rod 8 is located at a forward movement limit position relative to the carrier 7), an overall length of the first spring 91 is less than a natural length of the first spring 91. Thus, the first spring 91 always elastically biases the lock rod 8 in a direction of the forward movement of the lock rod 8 relative to the carrier 7, and the lock rod 8 usually moves forward and rearward together with the carrier 7 while the pin 84 remains in engagement with front end portions of the long holes 71a of the carrier 7.

Furthermore, while the carrier 7 is located at the locking-side overrun position (while the carrier 7 is located at a forward movement limit position relative to the gear member 4), an overall length of the second spring 92 is less than a natural length of the second spring 92. Thus, the second spring 92 always elastically biases the carrier 7 in the direction of the forward movement of the carrier 7 relative to the housing case 2.

Specifically, as illustrated in Fig. 7, while the carrier 7 is located anywhere throughout a movement range of the carrier 7 (from the unlocking-side overrun position to the locking-side overrun position), the second spring 92 biases the carrier 7 in the direction of the forward movement of the carrier 7. In addition, while the carrier 7 is located anywhere from the locked position to the locking-side overrun position, the first spring 91 biases the carrier 7 in the direction of the rearward movement of the carrier 7. The lengths and spring constants of the first and second springs 91, 92 are set in a way that makes a biasing force of the first spring 91 greater than that of the second spring 92 while the carrier 7 is located at the locking-side overrun position (the lock rod 8 is located at the engagement position). Thus, while the carrier 7 is located at the locking-side overrun position, a direction in which a resultant force obtained by combining the biasing forces of the first and second springs 91, 92 acts on the carrier 7 coincides with the direction of the rearward movement of the carrier 7, and the resultant force biases the carrier 7 in the direction of the rearward movement thereof.

As illustrated in Figs. 2A, 3A, 4A and 5A, the circuit board storage part 2B of the housing case 2 contains a circuit board 10. The first and second microswitches 11, 12 are mounted on the circuit board 10. The first micro switch 11 detects the carrier 7 located at the locked position, while the second microswitch 12 detects the carrier 7 located at the unlocked position.

Each microswitch is electrically connected to a controller (not illustrated), such as a CPU, which controls the drive of the electric motor 5. When the carrier 7 reaches the locked position after moving forward, a roller of the roller arm of the first microswitch 11 gets on the striker part 77 as illustrated in Fig. 2A, and the first microswitch 11 turns on to send a detection signal to the controller. When the carrier 7 reaches the unlocked position after moves rearward, a roller of the roller arm of the second microswitch 12 gets on the striker part 77 as illustrated in Fig. 3A, and the second microswitch 12 turns on to send a detection signal to the controller. The controller is electrically connected to a vehicle-side controller (not illustrated) installed in the vehicle via a communication interface, a vehicle communication line and the like.

Next, descriptions will be provided for how the electric steering lock device 1 works.

### <Unlocking Operation>

While the engine is off, the carrier 7 is located at the locked position, and the lock rod 8 is located at the engagement position, as illustrated in Figs. 2A and 2B. The lock rod 8 projects from the lock bolt insertion hole 24 of the housing case 2, and the engagement part 83 in the distal end of the lock rod 8 is in engagement with the engagement-receiving part SE of the steering shaft S. Thus, the turn of the steering shaft S is locked, and the vehicle theft is prevented. During this time, the first microswitch 11 is in the ON state, and based on the detection signal sent from the first microswitch 11, the controller recognizes that the carrier 7 is located at the locked position.

Once the driver turns on the engine start switch while in this state, the vehicle-side controller detects that the engine start switch is turned on, and sends an unlocking request signal to the electric steering lock device 1. In response, the controller of the electric steering lock device 1 activates the electric motor 5.

Once the electric motor 5 is activated, rotations of the output shaft 51 are transmitted to the gear member 4 while the rotational speed of the rotations is being reduced by the worm gear 52 and the worm wheel 44. Once the gear member 4 starts to rotate around the rotational axis X, the internally-threaded part 46 formed in the gear member 4 and the externally-threaded part 75 formed in the carrier 7 convert the rotational motion of the gear member 4 around the rotational axis X into the linear motion of the carrier 7 along the rotational axis X. Thereafter, the carrier 7, together with the lock rod 8 connected to the carrier 7 via the pin 84, moves rearward against the biasing force of the second spring 92.

When the carrier 7 reaches the unlocked position after moving rearward, the engagement part 83 of the lock rod 8 retreats into the lock bolt insertion hole 24, as illustrated in Figs. 3A and 3B. The lock rod 8 disengages from the steering shaft S, and the steering shaft S is unlocked. Thus, the driver can rotate the steering wheel. At this time, the second microswitch 12 turns on. Based on the detection signal sent from the second microswitch 12, the controller recognizes that the carrier 7 has moved to the unlocked position, and stops the drive of the electric motor 5 to send an unlocking completion signal to the vehicle-side controller. Hence, the unlocked state shown in Figs. 3A and 3B is held, and the vehicle can run.

### <Locking Operation>

When the vehicle stops and the driver shuts off the engine by turning off the engine start switch, the vehicle-side controller detects that the engine is shut off, and sends a locking request signal to the electric steering lock device 1. In response, the controller of the electric steering lock device 1 activates the electric motor 5 in reverse.

Thus, the reverse rotations of the output shaft 51 of the electric motor 5 are transmitted to the gear member 4 via the worm gear 52 and the worm wheel 44. The carrier 7, together with the lock rod 8 connected to the carrier 7 via the pin 84, moves forward.

When the carrier 7 reaches the locked position after moving forward, the first microswitch 11 turns on as illustrated in Fig. 2A. Based on the detection signal sent from the first microswitch 11, the controller recognizes that the carrier 7 has moved to the locked position. Thereafter, the controller stops the drive of the electric motor 5, and sends a locking completion signal to the vehicle-side controller. Hence, as illustrated in Figs. 2A and 2B, the lock rod 8 projects from the lock bolt insertion hole 24 of the housing case 2, and the engagement part 83 in the distal end of the lock rod 8 engages with the engagement-receiving part SE of the steering shaft S. Thus, the turn of the steering shaft S is locked, and the vehicle theft is prevented.

### <Half-lock function>

Depending on a rotation angle of the steering shaft S during the locking operation, the engagement-receiving part SE of the steering shaft S may shift from the position where the engagement-receiving part SE is expected to exactly face the engagement part 83 of the lock rod 8. In this case, the above-discussed locking operation cannot avoid the lock rod 8 interfering with a portion (for example, an outer peripheral cylindrical surface) of the steering shaft S which is other than the engagement-receiving part SE, and the lock rod 8 cannot move to the engagement position. The lock rod 8, therefore, is on the portion of the steering shaft S which is other than the engagement-receiving part SE, while elastically biased by the first spring 91 in the direction of the forward movement. During this time, the lock rod 8 is located at a position which is set back from the engagement position by the third distance ST3, as indicated with the double-dotted chain line in Figs. 2A and 2B.

Once the steering wheel is turned while in this state, the steering shaft S rotates. When the engagement-receiving part SE moves to the position where the engagement-receiving part SE is expected to exactly face the engagement part 83 of the lock rod 8, the lock rod 8 is biased by the first spring 91, and moves forward to the engagement position. Thereafter, as indicated with the solid line in Figs. 2A and 2B, the engagement part 83 of the lock rod 8 engages with the engagement-receiving part SE of the steering shaft S. Thus, the turn of the steering shaft S is locked.

### <Idle Rotations When Overrun Occurs>

If some malfunction such as a contact failure or a disconnection occurs, for example, in the system of the first microswitch 11 during the locking operation, no detection signal can be sent from the first microswitch 11 to the controller. Thus, the controller cannot recognize the movement of the carrier 7 to the locked position, and cannot stop the drive of the electric motor 5 at an appropriate timing. In this case, the gear member 4 continues rotating in the direction in which to move the carrier 7 forward, and the carrier 7 moves to the locking-side overrun position (overruns the locked position). While in the locking-side overrun position, the ridge 76 of the carrier 7 is out of the spiral groove 48 of the gear member 4 (the engagement between the carrier 7 and the gear member 4 via the motion converting mechanism is undone), and the gear member 4 idly rotates relative to the carrier 7 until the electric motor 5 stops its rotation.

If some malfunction occurs, for example, in the system of the second microswitch 12 during the unlocking operation, similarly, the gear member 4 continues rotating in the direction in which to move the carrier 7 rearward, and the carrier 7 moves to the unlocking-side overrun position (overruns the unlocked position). While in the unlocking-side overrun position, the ridge 76 of the carrier 7 is out of the spiral groove 48 of the gear member 4 (the engagement between the carrier 7 and the gear member 4 via the motion converting mechanism is undone), and the gear member 4 idly rotates relative to the carrier 7 until the electric motor 5 stops its rotation.

### <Return Operation from Overrun Position>

While the carrier 7 is located at the locking-side overrun position, the resultant force (the biasing force in the direction of the rearward movement) obtained by combining the biasing force in the direction of the forward movement from the second spring 92 and the biasing force in the direction of the rearward movement from the first spring 91 acts on the carrier 7, as illustrated in Fig. 7. In a case where, therefore, the gear member 4 is rotated in the direction in which to move the carrier 7 rearward while in this state, the rear end portion of the ridge 76 of the carrier 7 moves along the front side surface of the ridge 47 in the front row of the gear member 4, and gets into the spiral groove 48 from an opening in the front end portion of the spiral groove 48. Thus, the carrier 7 and the gear member 4 return to a state in which the ridge 76 and the spiral groove 48 are screwed together (engage with each other), that is to say, a state in which the carrier 7 engages with the gear member 4 via the motion converting mechanism.

Furthermore, while the carrier 7 is located at the unlocking-side overrun position, the second spring 92 biases the carrier 7 in the direction of the frontward movement, as illustrated in Fig. 7. In a case where, therefore, the gear member 4 is rotated in the direction in which to move the carrier 7 frontward while in this state, the front end portion of the ridge 76 of the carrier 7 moves along the rear side surface of the ridge 47 in the last row of the gear member 4, and gets into the spiral groove 48 from an opening in the rear end portion of the spiral groove 48. Thus, the carrier 7 and the gear member 4 return to a state in which the ridge 76 and the spiral groove 48 are screwed together (engage with each other), that is to say, a state in which the carrier 7 engages with the gear member 4 via the motion converting mechanism.

Descriptions will be hereinbelow provided for working and effects of the first embodiment.

In the electric steering lock device 1, the carrier 7 is movable relative to the lock rod 8, and is capable of moving forward to the locking-side overrun position even while the lock rod 8 is located at the engagement position. While the carrier 7 is located at the locking-side overrun position, the ridge 76 of the carrier 7 is out of the spiral groove 48 of the gear member 4. That is to say, the engagement between the carrier 7 and the gear member 4 via the motion converting mechanism is undone, and the gear member 4 can idly rotates relative to the carrier 7. Thus, even in the case where the overrun occurs and the gear member 4 continues rotating in the direction in which to move the carrier 7 forward, it is possible to avoid the rotational force of the gear member 4 being applied directly to the drive mechanism which includes the ridge 76 and the spiral groove 48. This makes it possible to prevent excessive load from acting on the drive mechanism, and to enhance the robustness of the device.

In addition, in the electric steering lock device 1, the stopper parts 26 block the forward movement of the carrier 7 behind the engagement position of the lock rod 8. Thus, when the carrier 7 moves forward to the locking-side overrun position, the biasing force of the first spring 91 acts on the carrier 7 in the direction of the rearward movement. Although, therefore, the carrier 7 overruns the locked position, the use of the biasing force makes it possible to return the ridge 76 of the carrier 7 to the inside of the spiral groove 48 of the gear member 4, that is to say, to return the carrier 7 to the state in which the carrier 7 engages with the gear member 4 via the motion converting mechanism. Furthermore, the use of the biasing force of the first spring 91 makes it possible to return the carrier 7 from the overrun, and to reduce the overrun allowance (the second distance ST2), as well as to increase the stroke of the carrier 7 in exchange for the reduction. This increases freedom in interface design.

Furthermore, in the electric steering lock device 1, the distance (the first distance ST1) the carrier 7 is capable of moving relative to the lock rod 8 is greater than the distance (the second distance ST2) between the locked position and the locking-side overrun position. Thus, although the lock rod 8 does not move forward beyond the engagement position, the carrier 7 is capable of moving forward to the locking-side overrun position to allow the gear member 4 to idly rotate relative to the carrier 7. This makes it possible to more securely prevent the excessive load from acting on the drive mechanism when the overrun occurs.

Moreover, in the electric steering lock device 1, while the carrier 7 is located at the locked position, the lock rod 8 is capable of moving between the engagement position and the non-engagement position where the lock rod 8 is on the portion of the steering shaft S which is other than the engagement-receiving part SE. The non-engagement position is set back from the engagement position by the third distance ST3, and the first distance ST1 is greater than the sum of the second distance ST2 and the third distance ST3 (see Fig. 6). Thus, even while the lock rod 8 is located at the non-engagement position, the carrier 7 is capable of moving forward to the locking-side overrun position. This makes it possible to more securely prevent the excessive load from acting on the drive mechanism, and to enhance the robustness of the device more.

Besides, in the electric steering lock device 1, the setting is made such that the biasing force of the first spring 91 is greater than that of the second spring 92 while the carrier 7 is located at the locking-side overrun position (while the lock rod 8 is located at the engagement position). Thus, regardless of the installation orientation of the electric steering lock device 1, the carrier 7 can be more securely biased in the direction of the rearward movement, while located at the locking-side overrun position. This makes it possible to more securely return the gear member 4 and the carrier 7 from the state in which the gear member 4 idly rotates relative to the carrier 7 while the carrier 7 is located at the locking-side overrun position, to the state in which the ridge 76 and the spiral groove 48 are screwed together (engage with each other).

In addition, in the electric steering lock device 1, the forward movement of the lock rod 8 is blocked by bringing the stopper parts 26 into contact with the end parts 84a of the pin 84 penetrating through the long holes 71a of the carrier 7. The above configurations and effects, therefore, can be obtained from the electric steering lock device 1 including the half-lock function without increasing the number of parts. Furthermore, since the stopper parts 26 controls the position of the lock rod 8 by coming into contact with the end parts 84a of the pin 84 which are the farthest from the engagement parts 83 in the distal end of the lock rod 8, the orientation of the lock rod 8 (particularly, the angle of the lock rod 8 on the rotational axis X) at the locked position can be stabilized.

### <Other Embodiments>

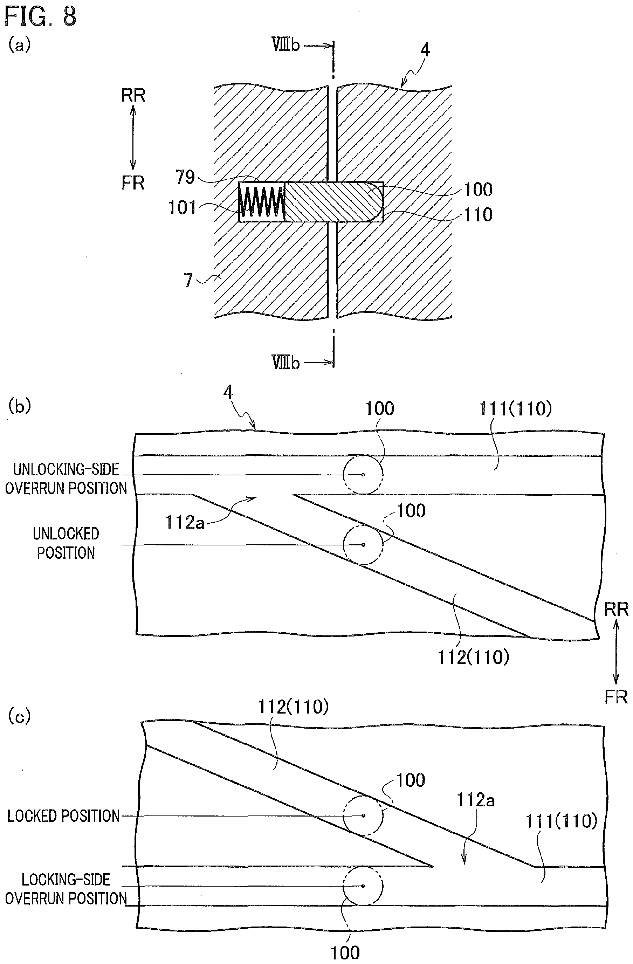

Referring to Figs. 8 to 11, descriptions will be provided for other embodiments. These embodiments include configurations similar to those of the first embodiment, and can bring about effects similar to those of the first embodiment. The following descriptions will be provided only for configuration and additional effects which are different from those of the first embodiment.

A second embodiment includes a cam follower 100 and cam grooves 110 instead of the externally-threaded part 75 and the internally-threaded part 46, as illustrated in Fig. 8. As illustrated in Fig. 8(a), the cam follower 100, together with a third spring 101, is housed in a cam follower housing hole 79 formed in an outer peripheral surface of the carrier 7. The third spring 101 biases the cam follower 100 outward in the radial direction. The cam follower 100 is biased by the third spring 101, and thus projects from the cam follower housing hole 79 to the outside of the outer peripheral surface of the carrier 7 in the radial direction. A distal end part of the cam follower 100 is always pressed against a bottom surface of the cam groove 110.

The cam groove 110 is formed in an inner peripheral surface of the gear member 4 which faces the outer peripheral surface of the carrier 7. As illustrated in Figs. 8(b) and 8(c), the cam groove 110 includes a pair of annular cam grooves 111, and a spiral cam groove 112 as a spiral groove connecting the annular cam grooves 111. The pair of annular cam grooves 111 are arranged in the gear member 4 with a space interposed in between in the front-rear direction, and continuously extend in the circumferential direction of the gear member 4. The spiral cam groove 112 continuously extends in the shape of a spiral winding around the rotational axis X. The cam follower 100 works as a protrusion which is capable of relatively moving along the spiral cam groove 112 while remaining in engagement with the spiral cam groove 112. When the cam follower 100 relatively moves along the spiral cam groove 112 in conjunction with the rotations of the gear member 4, the carrier 7 moves forward and rearward along the rotational axis X of the gear member 4. The cam follower 100 and the spiral cam groove 112 jointly function as the motion converting mechanism.

Once the above-discussed overrun occurs, the cam follower 100 comes out of the spiral cam groove 112 via an end part 112a, and goes into a corresponding one of the annular cam grooves 111. In addition, while the gear member 4 continues rotating in the same direction, the cam follower 100 rotates along the inside of the annular cam grooves 111. During this time, the position of the carrier 7 in the axial direction remains unchanged, and the gear member 4 idly rotates relative to the carrier 7. Four circles drawn with the double-dotted chain line in Figs. 8 (b) and 8(c) each represent a positional relationship between the cam follower 100 and the cam groove 110 depending on where the carrier 7 is located.

According to the second embodiment, while the carrier 7 is located at the locking-side overrun position, the cam follower 100 is out of the spiral cam groove 112 (the engagement between the carrier 7 and the gear member 4 via the motion converting mechanism is undone), and the gear member 4 can idly rotate relative to the carrier 7. Thus, even in the case where the locking-side overrun occurs and the gear member 4 continues rotating in the direction in which to move the carrier 7 forward, it is possible to avoid the rotational force of the gear member 4 being applied directly to the drive mechanism which includes the cam follower 100 and the cam grooves 110. This makes it possible to prevent excessive load from acting on the drive mechanism, and to enhance the robustness of the device.

Furthermore, according to the second embodiment, an inclination angle of the spiral cam groove 112 to the circumferential direction of the inner peripheral surface of the gear member 4 can be changed along the axial direction. This makes it possible to change an amount of movement of the carrier 7 per rotational angle of the gear member 4 in accordance with where the carrier 7 is located in the axial direction.

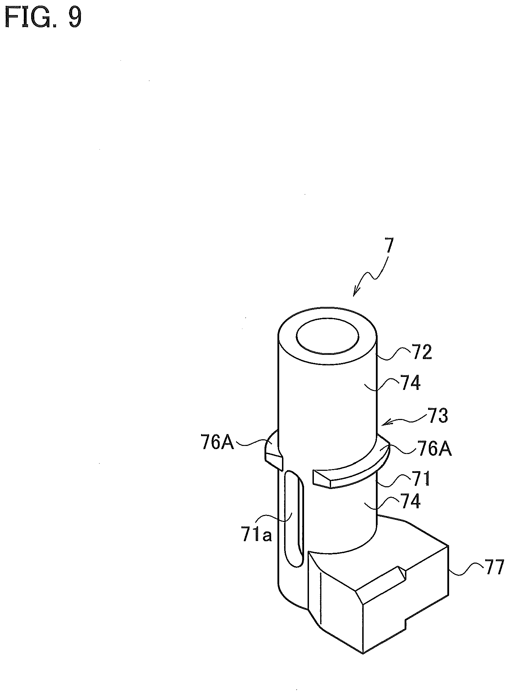

In a third embodiment, instead of the spiral ridge 76, a pair of plate-shaped protrusion pieces 76A are formed in the outer periphery of the carrier 7, as illustrated in Fig. 9. Each protrusion pieces 76A is a protrusion which is capable of relatively moving along the spiral groove 48 of the gear member 4 while remaining in engagement with the spiral groove 48. Since the protrusion pieces 76A relatively move along the spiral groove 48 in conjunction with the rotational motion of the gear member 4 along the rotational axis X relative to the carrier 7, the rotational motion of the gear member 4 is converted into the linear motion of the carrier 7 along the rotational axis X.

The third embodiment makes the structure of the protrusion pieces 76A simpler than that of the spiral ridge 76, and can reduce the material cost of the carrier 7.

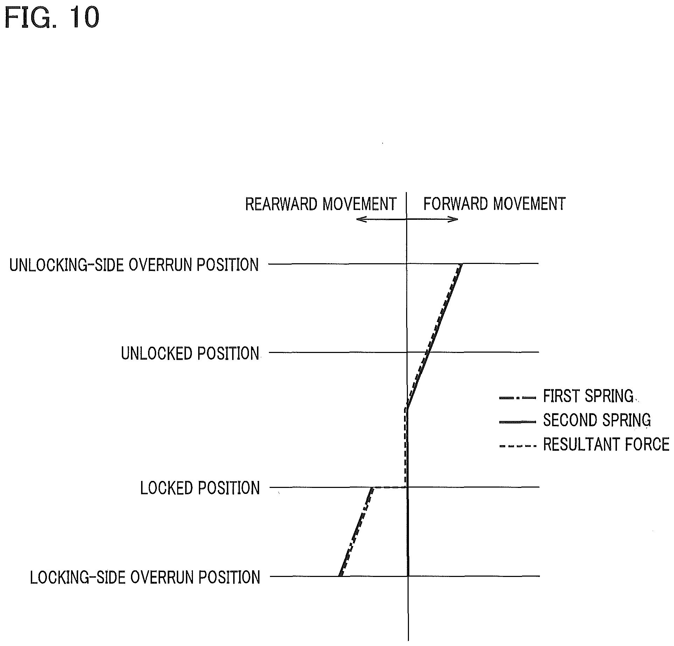

A fourth embodiment makes the mechanical characteristics of the second spring 92 different from those of the second spring 92 according to the first embodiment. Specifically, while the carrier 7 is located at the unlocked position, the overall length of the second spring 92 is less than the natural length of the second spring 92, and the second spring 92 biases the carrier 7 in the direction of the forward movement relative to the housing case 2, as indicated with a solid line in Fig. 10. On the other hand, while the carrier 7 is located at the locked position, the second spring 92 is off the carrier 7 and makes no biasing force act on the carrier 7. Although the related illustration is omitted, the rear end 92a of the second spring 92 according to the fourth embodiment is fixed to the housing lid 3, while a front end 92b of the second spring 92 detachably contacts the partition wall 78 of the carrier 7 (only the biasing force in the direction of the forward movement can be transmitted to the carrier 7). Furthermore, while the carrier 7 is located at the locked position, the distance from the partition wall 78 of the carrier 7 to the inner surface of the housing lid 3 is greater than the natural length of the second spring 92. Thus, as illustrated in Fig. 10, only the second spring 92 makes its biasing force acts on the carrier 7 in the direction of the forward movement while the carrier 7 is located at the unlocked position, whereas only the first spring 91 makes its biasing force acts on the carrier 7 in the direction of the rearward movement while the carrier 7 is located at the locked position.

The fourth embodiment can make the natural length of the second spring 92 less than the first embodiment in which the second spring 92 always biases the carrier 7 in the direction of the forward movement, and can reduce the weight and the material cost. Furthermore, since even the use of the second spring 92 with the shorter natural length can make the biasing force in the direction of the forward movement and in the direction of the rearward direction act on the carrier 7 respectively in the locked position and in the unlocked position, it is possible to inhibit rattle of the carrier 7 at the two positions. Incidentally, how to set the second spring 92 is not limited to what has been discussed above, and the setting may be performed by: fixing the front end 92b to the partition wall 78 of the carrier 7; and bringing the rear end 92a into detachable contact with the housing lid 3 (enabling only the biasing force in the direction of the rearward movement to be transmitted to the housing lid 3).

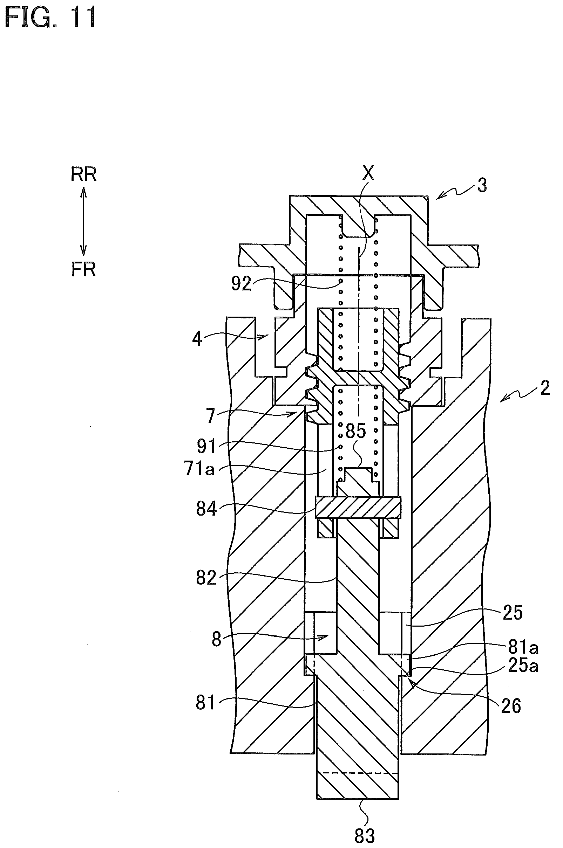

In a fifth embodiment, the stopper parts 26 contact and engage with the lock rod 8 itself while the lock rod 8 is located at the engagement position, as illustrated in Fig. 11. The plate part 81 of the lock rod 8 includes a columnar engagement protrusion 81a projecting from its rear end corner portion in a direction orthogonal to the front-rear direction. A guide groove 25 extending in parallel with the axial direction X is formed in the inner side surface of the actuator storage part 2A of the housing case 2. The engagement protrusion 81a moves in the guide groove 25 along the guide groove 25 in the front-rear direction. A front end part 25a on the guide groove 25 forms the stopper part 26. While the lock rod 8 is located at the engagement position, the stopper part 26 is in contact with and in engagement with the engagement protrusion 81a.

In the fifth embodiment, the stopper part 26 comes into contact with the engagement protrusion 81a of the plate part 81 which is closer to the engagement part 83 of the lock rod 8 than the end parts 84a of the pin 84 according to the first embodiment is, and controls the position of the lock rod 8. Thus, the way in which the lock rod 8 is located at the engagement position (particularly, its orientation in the direction orthogonal to the front-rear direction) can be stabilized. Incidentally, the cross-sectional shape of the engagement protrusion 81a is not limited to a specific one, and may be elliptic, semicircular, polygonal or the like.

In a sixth embodiment, although their illustration is omitted, multiple spiral grooves, such as two spiral grooves, are formed in the inner periphery of the gear member 4, while multiple spiral ridges capable of engaging with the multiple spiral grooves are formed in the outer periphery of the carrier 7. These ridges are capable of relatively moving along the multiple spiral grooves of the gear member 4 while remaining in engagement with the spiral grooves. The multiple spiral grooves include multiple end portion openings in each of their front and rear sides. The multiple end portion openings are arranged at equal intervals in the circumferential direction of the gear member 4. The interval between each two neighboring end portion openings in the circumferential direction is shorter in the multiple spiral grooves than in the single spiral groove 48. For this reason, the rotational angle of the gear member 4 in order to return to the state in which the carrier 7 located at the overrun position is screwed to the gear member 4 (the rotational angle at which the gear member 4 needs to be rotated in order to make the end portions of the ridges of the carrier 7 reach the end portion openings of the multiple spiral grooves) is smaller than in the case of the single spiral groove 48. Accordingly, the multiple spiral grooves make it possible to reduce the amount of time the return operation from each overrun position takes.

A seventh embodiment employs a rack and pinion mechanism as the motion converting mechanism, although its illustration is omitted. Specifically, a rack gear extending in a direction of the linear motion of the carrier 7 is formed in a side surface of the carrier 7, while a pinion gear in mesh with the rack gear is formed in an outer periphery of the gear member 4. Their gear type is not limited to a specific one. In a case where the rack gear and the pinion gear are a spur gear, the gear member 4 can be arranged such that the rotational axis X of the gear member 4 is parallel with a plane vertical to the direction of the linear motion of the carrier 7. On the other hand, in a case where the pinion gear is a helical gear, the gear member 4 can be arranged such that the rotational axis X of the gear member 4 diagonally intersects the plane vertical to the direction of the linear motion of the carrier 7.

The rack and pinion mechanism is capable of performing the idling operation when the overrun occurs. For example, in the case where the gear member 4 continues rotating in the direction in which to move the carrier 7 forward, the carrier 7 moves to the locking-side overrun position (overruns the locked position), and the pinion gear comes off from a rear end portion of the rack gear. Accordingly, the gear member 4 idly rotates relative to the carrier 7. On the other hand, in the case where the gear member 4 continues rotating in the direction in which to move the carrier 7 rearward, the carrier 7 moves to the unlocking-side overrun position (overruns the unlocked position), and the pinion gear comes off from a front end portion of the rack gear. Accordingly, the gear member 4 idly rotates relative to the carrier 7.

In addition, the rack and pinion mechanism is capable of performing the return operation from each overrun position. For example, while the carrier 7 is located at the locking-side overrun position, the resultant force obtained by combining the biasing forces of the first and second springs 91, 92 (the biasing force in the direction of the rear movement) acts on the carrier 7. Thus, in a case where while in this state, the gear member 4 is rotated in the direction in which to move the carrier 7 rearward, the gear member 4 and the carrier 7 return to a state in which the rear end portion of the rack gear meshes with the pinion gear of the gear member 4, that is to say, a state in which the carrier 7 engages with the gear member 4 via the rack and pinion mechanism. While the carrier 7 is located at the unlocking-side overrun position, the second spring 92 biases the carrier 7 in the direction of the forward movement. Thus, in a case where while in this state, the gear member 4 is rotated in the direction in which to move the carrier 7 forward, the gear member 4 and the carrier 7 return to a state in which the front end portion of the rack gear meshes with the pinion gear of the gear member 4, that is to say, a state in which the carrier 7 engages with the gear member 4 via the rack and pinion mechanism.

The seventh embodiment is also capable of setting the direction of the motion of the carrier 7 such that the direction thereof is not parallel with the rotational axis X of the gear member 4, and can increase the degree of freedom in the arrangement of the drive mechanism. Furthermore, for example, employment of a rack gear curved in the shape of an arc makes it possible to move the carrier 7 and the lock rod 8 (the lock unit 6) along an arc-shaped curve, or to make the carrier 7 and the lock rod 8 perform the rotational motion around the center axis of the arc. Incidentally, a ladder-type rack rail may be employed instead of the rack gear. Specifically, the ladder-type rack rail may be configured such that: multiple holes arranged in the direction of the motion (the direction of the movement) of the carrier 7 are formed in the side surface of the carrier 7; and the teeth of the pinion gear, while rotating, sequentially engage with the multiple holes in the carrier 7 in movement.

Although the foregoing descriptions have been provided for the multiple embodiments, the technical scope of the disclosure is not limited to the specific technical matters disclosed in the embodiments, and includes various modifications, changes, alternative techniques, and the like which can be easily derived from the disclosed technical matters.

In the first to seventh embodiments, the gear member 4 is driven via the speed reducing mechanism including the worm wheel 44 and the worm gear 52. How to drive the gear member 4, however, is not limited to a specific method. The gear member 4 may be driven, for example, by being connected directly to a rotor of a brushless motor.

In addition, in the first to sixth embodiments, the carrier 7 is provided with the protrusion(s) such as the single spiral ridge 76, the multiple spiral ridges, the cam follower 100 or the pair of plate-shaped protrusion pieces 76A, while the gear member 4 is provided with the spiral groove such as the spiral groove 48 or the spiral cam groove 112. The arrangement in the motion converting mechanism, however, is not limited to them. The arrangement may be configured such that the gear member 4 is provided with the protrusion(s) while the carrier 7 is provided with the spiral groove.

Furthermore, in the first to sixth embodiments, the carrier 7 is inserted through the inside of the annular gear member 4. However, a front portion of the gear member 4 may be inserted through the inside of a rear portion of the carrier 7 by: forming the front portion of the gear member 4 into a columnar shape; and forming the rear portion of the carrier 7 into an annular shape.

Moreover, in the first to seventh embodiments, the position of the carrier 7 is detected using the microswitches 11, 12. How to detect the position, however, is not limited to a specific method. The position may be detected using a publicly-known sensor such as a magnetic sensor or an optical sensor.

Besides, two or more of the first to seventh embodiments may be applied in combination.

All the contents of Japanese Patent Application No. 2017-113653 (whose filing date is June 8, 2017) are incorporated herein.

### INDUSTRIAL APPLICABILITY

The disclosure is applicable to the steering lock device for vehicles such as an automobile.

### REFERENCE SIGNS LIST

- 1: electric steering lock device
- 2: housing case (housing)
- 26: stopper part
- 3: housing lid (housing)
- 4: gear member
- 5: electric motor (electrically-operated motor)
- 6: lock unit
- 7: carrier
- 71a: long hole
- 8: lock rod (lock member)
- 84: pin (shaft member)
- 91: first spring (first biasing member)
- 92: second spring (second biasing member)
- S: steering shaft
- SE: engagement-receiving part
- ST1: first distance
- ST2: second distance
- ST3: third distance

## Claims

1. An electric steering lock device comprising:
a gear member rotationally driven by an electric motor;
a lock unit capable of advancing and retreating in a direction toward a steering shaft;
a housing for housing the gear member and the lock unit, wherein
the lock unit includes
a lock member capable of engaging with an engagement-receiving part of the steering shaft,
a carrier for holding the lock member in a way that makes the lock member capable of relatively moving in the direction, and
a first biasing member, installed between the carrier and the lock member, for biasing the lock member relative to the carrier toward the steering shaft,
the carrier is capable of moving in the direction, at least between a locked position where the lock member is capable of engaging with the engagement-receiving part of the steering shaft and a locking-side overrun position located close to the steering shaft beyond the locked position,
while located at the locked position, the carrier engages with the gear member via a mechanism for converting rotational motion of the gear member into motion of the carrier in the direction,
while located at the locking-side overrun position, the carrier is released from the engagement with the gear member via the mechanism, and allows the gear member to idly rotate relative to the carrier,
the housing includes a stopper part which is capable of contacting the lock member while the carrier is located at the locked position or close to the steering shaft beyond the locked position, and
the stopper part comes into contact with the lock member, and thereby stops the lock member from moving toward the steering shaft beyond a position where the lock member engages with the engagement-receiving part of the steering shaft.

2. The electric steering lock device according to claim 1, wherein
the lock member is capable of moving relative to the carrier by a first distance, and
the locking-side overrun position is away from the locked position by a second distance which is less than the first distance.

3. The electric steering lock device according to claim 2, wherein
while the carrier is located at the locked position, the lock member is capable of moving between an engagement position where the lock member engages with the engagement-receiving part of the steering shaft and a non-engagement position, located behind and away from the engagement position by a third distance, where the lock member is on a portion of the steering shaft which is other than the engagement-receiving part, and
the first distance is greater than a sum of the second distance and the third distance.

4. The electric steering lock device according to any one of claims 1 to 3,
further comprising a second biasing member, installed between the housing and the carrier, for biasing the carrier relative to the housing toward the steering shaft, wherein
while the carrier is located at the locking-side overrun position and the lock member is in contact with the stopper part, a biasing force of the first biasing member is greater than that of the second biasing member.

5. The electric steering lock device according to any one of claims 1 to 4, wherein
the carrier includes a long hole extending in the direction,
the lock member includes a shaft member penetrating through the long hole,
the shaft member is capable of moving inside the long hole in the direction by the first distance, and
while the carrier is located further forward than the locked position, the stopper part comes into contact with an end portion of the shaft member, and thereby stops the lock member from moving toward the steering shaft.
